Europäisches Patentamt

(19) European Patent Office (11) Publication number: **0 034 399**

Office européen des brevets **B1**

(12) **EUROPEAN PATENT SPECIFICATION**

(45) Date of publication of patent specification: **11.04.84** (51) Int. Cl.³: **B 23 P 15/40**

(21) Application number: **81300055.1**

(22) Date of filing: **07.01.81**

(54) Method of making a shear blade.

(30) Priority: **13.02.80 PC T/US80/00143**

(43) Date of publication of application:
**26.08.81 Bulletin 81/34**

(45) Publication of the grant of the patent:
**11.04.84 Bulletin 84/15**

(84) Designated Contracting States:
**BE FR SE**

(56) References cited:
**CA - A - 840 776**
**FR - A - 1 081 379**
**US - A - 1 672 516**
**US - A - 1 798 229**
**US - A - 3 690 353**
**US - A - 3 797 539**
**US - A - 4 069 847**
**US - A - 4 131 145**

(73) Proprietor: **CATERPILLAR TRACTOR CO.**
**100 Northeast Adams Street**
**Peoria Illinois 61629 (US)**

(72) Inventor: **Wirt, Leon A.**
**313 Essington Road**
**Joliet Illinois 60435 (US)**
Inventor: **Webb, Arthur A.**
**4420 Sussex Road**
**Joliet Illinois 60436 (US)**

(74) Representative: **Brunner, Michael John et al,**
**GILL JENNINGS & EVERY 53-64 Chancery Lane**
**London WC2A 1HN (GB)**

Courier Press, Leamington Spa, England.

## Method of making a shear blade

The invention relates to a method for making a shear blade assembly for a tree harvester in particular.

Tree harvesters are used extensively to hold and cut trees and transport the harvested product to a desired location. Such tree harvesters commonly use a shear blade assembly which has two blade portions each with a cutting edge. The blade portions are urged into opposite sides of a tree in order to sever the trunk for harvesting purposes. The operation and details of such a tree harvester are shown, for example, in US—A—3,797,539.

It has become increasingly common to form such shear blade assemblies in a concave, part-cylindrical or part-spherical configuration in order to minimize damage to the trees to be cut and to carry cutting loads through the assemblies in a more efficient manner. Such curved blades assemblies are disclosed in US—A—4,069,847, US—A—4,131,145 and also in CA—A—840,776.

Heretofore, such dish-shaped blade assemblies have been manufactured either by depressing a flat blank to a desired shape, dividing it into first and second portions and then machining cutting edges along the resultant curved edges or by making the first and second blade portions individually from separate flat blanks. The latter method is disclosed briefly in U.S.—A—3,690,353. As the cutting edges are machined along the curved surfaces, special machining techniques are required to maintain a constant angle chamfer or bevelled edge which is critical to the operation of the curved blades. Where the blade portions of the shear blade assembly are formed separately, there can also be some problem with uniformity between portions, as well as duplicate manufacturing operations.

The present invention is directed to over coming one or more of these problems.

According to the present invention a method of making a shear blade assembly from a blank comprises the steps of forming first and second elongate bevelled surfaces facing one another on a first side of the blank; forming the blank into a substantially concave shape and thereby curving the line of the first ands econd bevelled surfaces; and thereafter dividing the so formed preform along the line of the first and second bevelled surfaces to form first and second blade portions each having a respective one of the first and second bevelled surfaces.

In manufacturing a shear blade assembly, the first and second surfaces must be precisely and uniformly cut in order to form the cutting edges associated with the blade portions. Where such surfaces are cut along the curvature resulting from and following the step of pressing the blank or individual blade portions, it is difficult to maintain necessary tolerances without special machining operations. The present method allows the cutting edges to be at least partially formed first and then the blank as a whole to be depressed to a desired, uniform, concave shape to curve the cutting edges.

Figure 1 is a diagrammatic plan view of one embodiment of a shear blade assembly which can be made with the method of the present invention and which is associated with a tree harvester;

Figure 2 is a diagrammatic cross sectional view of the shear blade assembly of Figure 1 as it appears at a step of manufacture with one emodiment of the method of the present invention;

Figure 3 is a diagrammatic cross sectional view of the shear blade assembly of Figure 1 as it appears during another step of manufacture subsequent to the step shown in Figure 2;

Figure 4 is an enlarged diagrammatic cross sectional view of the area associated with the cutting edges of the shear blade curing manufacture with the method of the present invention; and

Figure 5 is an enlarged diagrammatic cross sectional view of the area associated with the cutting edges of the shear blade during manufacture with another embodiment of the method of the present invention.

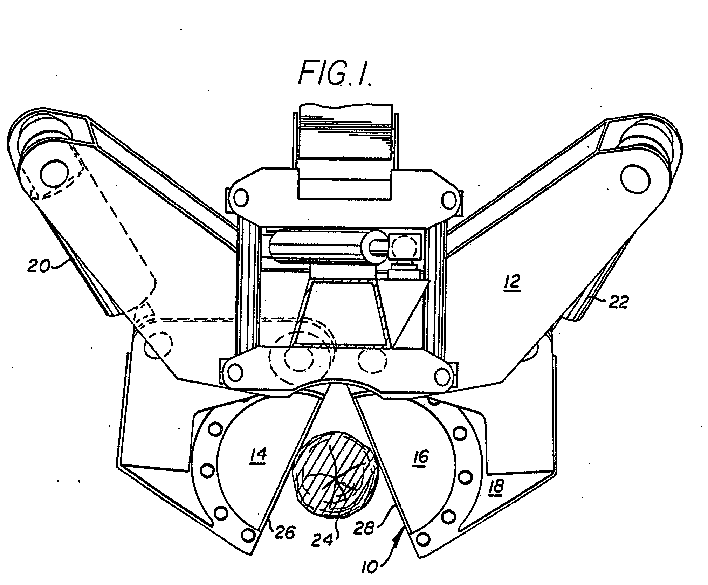

Referring to the drawings, and particularly to Figure 1, a shear blade 10 is shown, for example, associated with a tree harvester 12. The shear blade asembly has first and second blade portions 14, 16 which are mounted on a frame 18 of the harvester and hydraulically adjustable one relative to the other by hydraulic cylinders 20, 22. In harvesting a tree 24, the blade portions are positioned a sufficient distance one from the other and then positioned around the tree. The blade portions are then urged into opposite portions of the tree circumference in order to force respective, related cutting edges 26, 28 into the tree. The cutting edges sever the tree which can then be transported as desired.

The first and second blade portions 14, 16 each have a generally concave or partly spherical configuration resulting in a concave shape which extends across the cutting edges 26, 28 of the shear blade assembly 10 and is best seen when the cutting edges 26, 28 are in their mated or closed position.

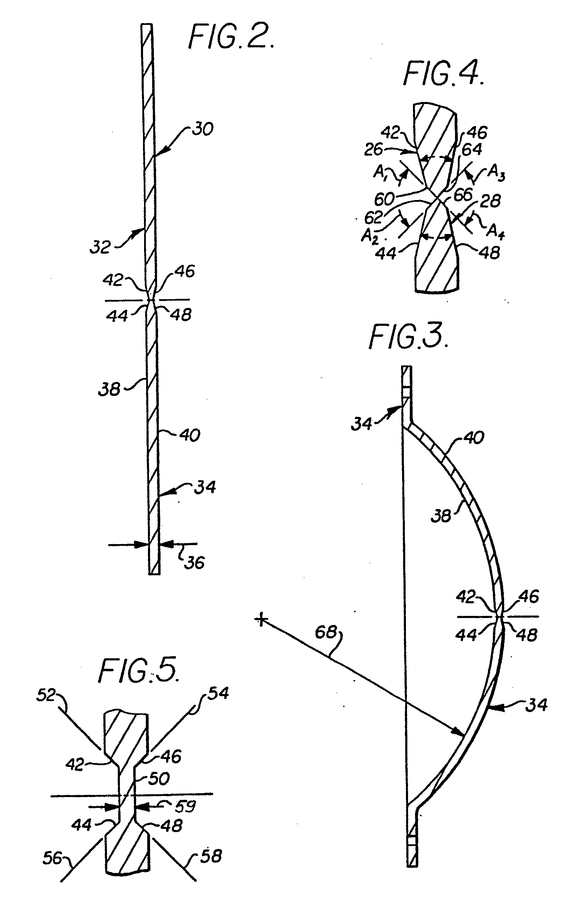

Referring now to Figures 2—4, steps in a method for making the shear blade 10 are represented which results in the shear blade configuration above-described for use with the tree harvester 12. The shear blade is made from a blank 30 which has first and second sides 32, 34 and a width 36. The blank is preferably a substantially flat plate cut in a desired shape from a material selected for the type of application to be performed. The width of the blank shown is the perpendicular distance between surfaces 38, 40 associated with the first and second sides, respectively.

Initially, the method involves cutting or machining first and second beveled surfaces 42, 44 one facing the other on the first side 32 of the blank 30. In other words, the beveled surfaces are each formed at an angle from the planar surface 38 (Figure 2) associated with the first side and extend from the first side toward the second side 34 of the blank in a direction towards each other. In the embodiment shown, third and fourth beveled surfaces 46, 48 are also similarly cut one facing the other on the second side of the blank. The first and third beveled surfaces 42, 46 are positioned generally opposite one another at a desired location on the blank to define the first cutting edge 26 (Figures 1 and 4) of the associated first blade portion 14 when it is formed. The second and fourth beveled surfaces 44, 48 are positioned generally opposite one another and adjacent the first and third beveled surfaces to define the second cutting edge 28 of the associated second blade portion 16 when it is formed.

In the preferred embodiment of the method, the beveled surfaces 42, 44, 46, 48 are cut such that they intersect as is shown in Figure 2. In cutting the beveled surfaces it may also be desirable to form a web 50 (Figure 5) which extends from the first and third beveled surfaces to the second and fourth beveled surfaces. Generally, the web will be positioned at a location passing through the intersection of first and third planes 52, 54 defined by the first and third beveled surfaces, respectively, and the intersection of second and fourth planes 56, 58 defined by the second and fourth beveled surfaces, respectively. The web has a width 59 which is of a substantially smaller magnitude relative to the width of the blank 30 but which must be of sufficient dimensions to maintain the blank 30 in a single piece as the method is performed and until said blank is later divided to form the first and second blade portions as hereinafter discussed.

The next or second step in making the shear blade assembly 10 involves depressing the blank 30 and forming the desired generally concave shape in the blank and across the beveled surfaces 42, 44, 46, 48 (Figure 3). In other words, the second step involves initiating a curvature in the beveled surfaces as well as other portions of the blank. The operations involved in forming this "dish-shaped" preform determine the strength required of the narrowed area formed by cutting the beveled surfaces necessary to maintain the preform in a single piece while it is being shaped. Following the above, the first and second blade portions 14, 16, each having their respective beveled surfaces 42, 46; 44, 48, are formed in a step 3 by dividing the preform, as it is seen in Figure 3, along the bevelled surfaces in a cutting operation or the like.

In the steps represented by Figures 2—4, the preform is preferably divided by cutting the first, second, third and fourth bevelled surfaces 42, 44, 46, 48 at preselected angles $A_1$, $A_2$, $A_3$, $A_4$ (Figure 4) to form a respective cutting surface 60, 62, 64, 66, on each of the bevelled surfaces. The operation of forming the cutting surfaces at the preselected angles on the bevelled surfaces will divide the preform thus reducing or eliminating altogether the need to remove additional material by an additional grinding operation. Where a web 50 is utilized, whether or not the angled cutting edges are also formed, it may subsequently be desirable, if not accomplished during the dividing step, to perform some type of finishing operation to remove the web entirely and complete the desired shape of the resultant cutting edges 26, 28.

In the manufacture of a shear blade assembly 10, such as is used on the tree harvester 12, the cutting edges 26, 28, are initially formed from the bevelled surfaces 42, 44, 46, 48, cut or machined across a flat blank 30 which simplifies operations involved in making such surfaces. The desired shape of the preform is then made by depressing the blank in a desired manner, such as at a preselected radius 68. The preform is also heat treated for hardening purposes following step 2 and prior to dividing the preform in step 3 by, for example, machining the cutting surfaces 60, 62, 64, 66. Other manufacturing operations may similarly be performed prior to dividing said preform in order to facilitate handling of, and uniform operations with respect to, both of the blade portions 14, 16 while part of the one-piece blank.

Following the step of dividing the preform the first and second blade portions 14, 16 are formed and ready for attachment to and use on the tree harvester 12. Where necessary, the bevelled surfaces 42, 44, 46, 48 and cutting surfaces 60, 62, 64, 66 are, at this point, machine finished or otherwise treated to remove the excess material and to further define the profile of the cutting edges 26, 28 as desired. However, it is anticipated that such operations, which will involve more difficult operations on the curved surfaces, will be minimal owing to the ability to treat and form the bevelled surfaces before depressing the blank into its desired curved shape.

Other objects and advantages will become apparent from a study of the specification, drawings and appended claims.

## Claims

1. A method of making a shear blade assembly (10) from a blank (30) comprising the steps of forming first and second elongate bevelled surfaces (42, 44) facing one another on a first side (32) of the blank (30); forming the blank (30) into a substantially concave shape and thereby curving the line of the first and second bevelled surfaces (42, 44); and thereafter dividing the so formed preform along the line of the first and second bevelled surfaces (42, 44) to form first and second blade portions (14, 16) each having a respective one of the first and second bevelled surfaces (42, 44).

2. A method according to claim 1, which includes the step of forming a third bevelled surface (46) opposite the first bevelled surface (42) on the second side (34) of the blank (30) and forming a fourth bevelled surface (48) opposite the second bevelled surface (44) on the second side (34) of the blank (30).

3. A method according to claim 1 or claim 2, wherein the preform is divided by cutting the first and second bevelled surfaces (42, 44) or the first, second, third and fourth bevelled surfaces (42, 44, 46, 48) respectively at preselected angles to form respective cutting surfaces (60, 62, 64, 66) on each of the bevelled surfaces.

4. A method according to claim 1 or claim 2, wherein a web (50) is formed between the first and second bevelled surfaces (42, 44) or between the first and third and the second and fourth bevelled surfaces (42, 46; 44, 48) respectively.

5. A method according to claim 4, wherein the preform is divided by cutting along its web (50).

6. A method according to claim 5, when dependent on claim 2, wherein the first and third bevelled surfaces (42, 46) define first and third intersecting planes (52, 54), respectively, and the second and fourth bevelled surfaces (44, 48) define second and fourth intersecting planes (56, 58), respectively, and the web (50) is formed passing through the intersections of the first and third planes (52, 54) and of the second and fourth planes (56, 58).

7. A method according to any of claims 1 to 6, wherein the concavity of the preform is produced by pressing the blank (30) to a part-spherical shape.

8. A method according to any of claims 1 to 7, including the step of heat treating the preform before dividing it.

**Revendications**

1. Procédé de fabrication d'un ensemble de lames de cisaillement (10) à partir d'une ébauche (30), comprenant les étapes consistant à former une première et une seconde surfaces biseautées allongées (42, 44) en regard l'une de l'autre sur un premier côté (32) de l'ébauche (30); à donner à l'ébauche (30) une forme sensiblement concave et à incurver ainsi la ligne des première et seconde surfaces biseautées (42, 44); et à diviser ensuite la préforme ainsi formée le long de la ligne des première et seconde surfaces biseautées (42, 44) pour former une première et une seconde parties de lame (14, 16) ayant chacune l'une des première et seconde surfaces biseautées (42, 44).

2. Procédé selon la revendication 1, qui comprend l'étape consistant à former une troisième surface biseautée (46) en face de la première surface biseautée (42) sur le second côté (34) de l'ébauche (30) et à former une quatrième surface biseautée (48) en face de la seconde surface biseautée (44) sur le second côté (34) de l'ébauche (30).

3. Procédé selon la revendication 1 ou 2, dans lequel la préforme est divisée en découpant les première et seconde surfaces biseautées (42, 44) ou les première, seconde, troisième ou quatrième surfaces biseautées (42, 44, 46, 48) respectivement suivant des angles préalablement choisis pour former des surfaces de coupe respectives (60, 62, 64, 66) sur chacune des surfaces biseautées.

4. Procédé selon la revendication 1 ou 2, dans lequel une âme (50) est formée entre les première et seconde surface biseautées (42, 44) ou entre les première et troisième et les seconde et quatrième surfaces biseautées (42, 46; 44, 48) respectivement.

5. Procédé selon la revendication 4, dans lequel la préforme est divisée en la coupant le long de son âme (50).

6. Procédé selon la revendication 5, quand elle dépend de la revendication 2, dans lequel les première et troisième surfaces biseautées (42, 46) définissent un premier et un troisième plans d'intersection (52, 54) respectivement, et les seconde et quatrième surfaces biseautées (44, 48) difinissent un second et un quatrième plans d'intersection (56, 58) respectivement, et l'âme (50) est formée en passant par les intersections des premier et troisième plans (52, 54) et des second et quatrième plans (56, 58).

7. Procédé selon l'une quelconque des revendications 1 à 6, dans lequel la concavité de la préforme est produite en emboutissant l'ébauche (30) selon une forme partiellement sphérique.

8. Procédé selon l'une quelconque des revendications 1 à 7, comprenant l'étape consistant à traiter la préforme à la chaleur avant de la diviser.

**Patentansprüche**

1. Verfahren zur Herstellung einer Scherklingenanordnung (10) aus einem Rohling (30), wobei folgende Schritte vorgesehen sind: Ausbildung erster und zweiter langgestreckter abgeschrägter Oberflächen (42, 44) die aufeinander auf einer ersten Seite (32) des Rohlings (30) hinweisen, Ausbildung des Rohlings (30) in eine im wesentlichen konkave Form, wodurch die Linie der ersten und zweiten abgeschrägten Oberflächen (42, 44) gekrümmt wird, und darauffolgende Unterteilung der so gebildeten Vor-Form längs der Linie der ersten und zweiten abgeschrägten Oberflächen (42, 44) zur Bildung erster und zweiter Klingenteile (14, 16), deren jeder eine entsprechende der ersten und zweiten abgeschrägten Oberflächen (42, 44) besitzt.

2. Verfahren nach Anspruch 1, unter Einschluß des Schritts der Ausbildung einer dritten abgeschrägten Oberfläche (46), entgegengesetzt sur ersten abgeschrägten Oberfläche (42) auf der zweiten Seite (34) des Rohlings (30) und Ausbildung einer vierten abgeschrägten Oberfläche (48), entgegengesetzt zur zweiten abgeschrägten Oberfläche (44) auf der zweiten Seite (34) des Rohlings (30).

3. Verfahren nach Anspruch 1 oder 2, wobei die Vor-Form unterteilt wird durch Schneiden der ersten und zweiten abgeschrägten Oberflächen (42, 44) oder der jeweiligen ersten, zweiten, dritten und vierten abgeschrägten Oberflächen (42, 44, 46, 48) mit ausgewählten Winkeln zur Bildung entsprechender Schneidoberflächen (60, 62, 64, 66) an jeder der abgeschrägten Oberflächen.

4. Verfahren nach Anspruch 1 oder 2, wobei ein Steg (50) zwischen den ersten und zweiten abgeschrägten Oberflächen (42, 44) ausgebildet ist, oder aber zwischen den ersten und dritten bzw. zweiten und vierten abgeschrägten Oberflächen (42, 46; 44, 48).

5. Verfahren nach Anspruch 4, wobei die Vor-Form durch Schneiden längs ihres Stegs (50) unterteilt wird.

6. Verfahren nach Anspruch 5, bei Abhängigkeit von Anspruch 2, wobei die ersten und dritten abgeschrägten Oberflächen (42, 46) erste bzw. dritte sich schneidende Ebenen (52, 54) definieren, und wobei die zweiten bzw. vierten abgeschrägten Oberflächen (44, 48) zweite bzw. vierte sich schneidende Ebenen (56, 58) definieren, und wobei der Steg (50) durch die Schnitte der ersten und dritten Ebenen (52, 54) und der zweiten und vierten Ebenen (56, 58) verlaufend ausgebildet ist.

7. Verfahren nach einem der Ansprüche 1 bis 6, wobei die Konkavität der Vor-Form dadurch erzeugt wird, daß man den Rohling (30) in eine teilsphärische Form preßt.

8. Verfahren nach einem der Ansprüche 1 bis 7, unter Verwendung des Schrittes der Wärmebehandlung der Vor-Form vor deren Unterteilung.

# FIG. I.

FIG.2.

30

32

42     46

44     48

38

40

34

36

FIG.4.

42    46

26    64

$A_1$    $A_3$

60    66   28

62

$A_2$    $A_4$

44     48

FIG.3.

34

40

38

42    46

44    48

68

34

FIG.5.

52      54

42     46

50

59

44     48

56      58

2